(19) Europäisches Patentamt

European Patent Office

Office européen des brevets

(11) **EP 1 591 957 A1**

(12) **DEMANDE DE BREVET EUROPEEN**

(43) Date de publication:
**02.11.2005 Bulletin 2005/44**

(51) Int Cl.⁷: **G06T 5/00**

(21) Numéro de dépôt: **05290946.2**

(22) Date de dépôt: **29.04.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **30.04.2004 FR 0404590**

(71) Demandeur: **Sagem SA**
**75512 Paris Cedex 15 (FR)**

(72) Inventeur: **Taupier, Nicolas**
**95150 Taverny (FR)**

(74) Mandataire: **Debay, Yves**
**Cabinet Debay,**
**126 Elysée 2**
**78170 La Celle Saint Cloud (FR)**

(54) **Procédé et système de traitement d'image par filtrage de blocs de pixels de l'image**

(57) La présente invention concerne un procédé de traitement d'image, par filtrage séparé de chacune des composantes chromatiques et/ou de luminance des signaux représentatifs des pixels d'une image (1), mis en oeuvre par un système (100) de traitement d'image et caractérisé en ce qu'il consiste en une étape (7) de filtrage, éventuellement précédée d'une étape (4) de détection de contour suivie d'un rehaussement (5) du contour éventuellement détecté, ce traitement étant réalisé par blocs (2) successifs de traitement dont les dimensions carrées permettent de limiter le nombre d'accès à des moyens (110) de mémorisation dans lesquels sont stockés les signaux représentatifs des pixels de l'image (1), chaque pixel étant traité en fonction des signaux représentatifs des pixels voisins au sein de blocs (20) de filtrage, centrés autour du pixel (11) en cours de traitement, successivement décalés d'un pixel à la fois, ligne par ligne, au sein des blocs (2) de traitement.

FIGURE 3

**Description**

DOMAINE TECHNIQUE DE L'INVENTION

La présente invention s'applique aux domaines du traitement d'image et de l'électronique. L'invention s'applique plus particulièrement au traitement des pixels d'une image, lors de l'établissement de signaux représentatifs des couleurs d'une image. L'invention concerne le traitement de l'image par filtrage de blocs de pixels de l'image, par exemple, en vue de son re-dimensionnement. L'invention permet l'amélioration de la qualité de l'image, pour permettre, par exemple, son agrandissement ou sa réduction. La présente invention concerne un procédé de traitement d'image par filtrage de blocs de pixels. La présente invention concerne également un système permettant la mise en oeuvre du procédé selon l'invention.

ARRIERE-PLAN TECHNOLOGIQUE DE L'INVENTION

Une image est représentée, dans les systèmes de traitement d'image, par un ensemble de lignes successives constituées de points successifs (ou pixels). Les valeurs représentatives de l'arrangement bidimensionnel et des compositions chromatiques et/ou de luminance des pixels définissent l'image dans son intégralité. La composition chromatique d'un pixel donné d'une image peut être représentée dans différents espaces de couleur, dont les dimensions correspondent chacune à une composante chromatique et/ou de luminance. Par exemple, la composition chromatique d'un pixel peut être représentée dans un espace de couleur de type RGB (pour l'anglais « Red Green Blue », c'est-à-dire Rouge Vert Bleu) ou de type CMY (pour l'anglais « Cyan Magenta Yellow, c'est-à-dire Cyan Magenta Jaune) ou encore de type CMYK (pour l'anglais « Cyan Magenta Yellow blacK, c'est-à-dire Cyan Magenta Jaune Noir). Chaque dimension de ces espaces correspond à une composante chromatique. Il existe également des espaces de représentation des pixels, tels que l'espace LAB (pour l'anglais Luminance, A and B color channels), dans lesquels une des dimensions correspond à une composante de luminance des pixels et les autres correspondent à des composantes chromatiques. Dans les systèmes de traitement d'images électroniques, les pixels d'une image sont généralement représentés par les coordonnées d'un point dans un espace de représentation. Ces coordonnées du point représentatif de la composition chromatique d'un pixel peuvent être traitées individuellement pour chaque dimension de l'espace de représentation. Le système ne traite alors qu'une composante chromatique ou de luminance à la fois. Les résultats des traitements réalisés sur chaque composante sont ensuite assemblés pour obtenir les signaux représentatifs de la nouvelle composition chromatique du pixel traité. Ces traitements peuvent correspondre à un rehaussement ou à un filtrage des contours dans l'image, par augmentation ou diminution de la valeur des signaux représentatifs d'une composante chromatique d'un pixel donné, par rapport aux pixels voisins. Ces traitements de la composition chromatique des pixels sont utiles pour améliorer la qualité de l'image, par exemple, avant son re-dimensionnement ou son affichage par des dispositifs d'affichage.

Il est connu dans l'art antérieur, notamment par les demandes de brevet EP 0 738 989, US 5 970 179, US 6 263 120 et US 5 054 100, des procédés de traitement d'image par filtrage des pixels d'une image. Ces procédés réalisent un filtrage des pixels successifs au sein d'une ligne donnée d'une image. Les signaux représentatifs de la composition chromatique des pixels sont stockés généralement dans une mémoire externe au dispositif de traitement d'image. Les dispositifs de traitement d'image ne permettent généralement pas de traiter l'image entière en une seule fois et accèdent donc à une partie de cette mémoire pour en extraire les signaux représentatifs de la composition chromatique d'un certain nombre de pixels de l'image. Ces procédés extraient les signaux représentatifs d'une ou plusieurs lignes de pixels de l'image et réalisent les opérations de rehaussement ou de filtrage des contours sur les pixels de ces lignes. Ces procédés présentent l'inconvénient de nécessiter de nombreux accès à la mémoire externe au dispositif de traitement d'image, dont la bande passante est généralement limitée. Ces accès répétés ralentissent le procédé.

Il est également connu de l'art antérieur, notamment par les demandes de brevet EP 0 738 989, US 5 970 179, US 6 263 120 et US 5 054 100, des procédés de traitement d'image permettant le rehaussement ou le filtrage des contours au sein d'une image, grâce à l'utilisation d'un test de détection de contour, puis d'une méthode de rehaussement ou de filtrage de contours. Ces procédés présentent l'inconvénient d'utiliser un test qui n'est pas forcément suffisamment efficace pour détecter les contours sans détecter des variations locales de composition chromatique qui seraient dues à la présence d'un bruit dans la composition chromatique de l'image. Certains de ces procédés permettent une détection efficace mais ils nécessitent généralement des calculs longs et coûteux en terme de puissance, comme, par exemple, des calculs de vecteurs d'iso densité. Ces procédés présentent également l'inconvénient de nécessiter de nombreux accès en mémoire pour réaliser le test de détection de contours, puis pour le traitement des contours détectés.

Dans ce contexte, il est intéressant de proposer un procédé permettant, d'une part, de réaliser plusieurs tests de détection de contours de façon à exclure les variations locales dues au bruit présent dans la composition chromatique des pixels de l'image et, d'autre part, de réaliser le traitement des pixels de l'image par des blocs carrés dont les dimensions sont adaptées au traitement réalisé, de façon à limiter le nombre d'accès à la mémoire externe où sont stockés les signaux représentatifs de la composition chromatique des pixels de l'image. Il est également intéressant de proposer un système permettant la mise en oeuvre des étapes du procédé selon l'invention.

DESCRIPTION GENERALE DE L'INVENTION

La présente invention a pour but de pallier certains inconvénients de l'art antérieur en proposant un procédé de traitement d'image par filtrage de blocs de pixels, dont les dimensions sont adaptées de façon à limiter le nombre d'accès à une mémoire externe où sont stockés les signaux représentatifs de la composition chromatique des pixels de l'image, et permettant, de réaliser plusieurs tests de détection de contours de façon à exclure les variations locales dues au bruit présent dans la composition chromatique des pixels de l'image.

Ce but est atteint par un procédé de traitement d'image, par filtrage séparé de chacune des composantes chromatiques et/ou de luminance des signaux représentatifs des pixels d'une image, mis en oeuvre par un système de traitement d'image et caractérisé, en ce qu'il consiste en au moins une étape de filtrage des signaux représentatifs des pixels de l'image, précédée d'une étape de décision de la nécessité de réaliser, préalablement à l'étape de filtrage, des étapes de détection de contours et de rehaussement des contours détectés, ces étapes de filtrage, de détection et de rehaussement de contours étant réalisées grâce à des blocs successifs de traitement dont les dimensions carrées sont adaptées de façon à limiter le nombre d'accès à des moyens de mémorisation dans lesquels sont stockés les signaux représentatifs de la composition chromatique et/ou de luminance des pixels de l'image, dans le système de traitement d'image, chaque pixel étant traité en fonction des signaux représentatifs des pixels voisins au sein de blocs de filtrage, centrés autour du pixel en cours de traitement, successivement décalés d'un pixel à la fois, ligne par ligne, au sein des blocs de traitement.

Selon une autre particularité, l'étape de filtrage peut être précédée des étapes suivantes, permettant une amélioration de la qualité de l'image par rehaussement de contours :

- détection de contours au sein du bloc de filtrage dans lequel est compris le pixel en cours de traitement, grâce à trois tests différents de calcul des variations de la composition chromatique et/ou de luminance entre des pixels du bloc de filtrage ;
- rehaussement de contours, lorsque les trois tests révèlent la présence d'un contour, par attribution, au pixel en cours de traitement, d'une valeur intermédiaire entre la valeur initiale des signaux représentatifs de sa composition et les valeurs des signaux représentatifs de la composition des pixels voisins au sein du bloc de filtrage, grâce à une pluralité de coefficients réglables pondérateurs des valeurs des signaux représentatifs de la composition des pixels au sein du bloc de filtrage.

Selon une autre particularité, l'étape de filtrage, lors du traitement de chacune des composantes des signaux représentatifs des pixels de l'image, au sein des blocs de filtrage, permet une amélioration de la qualité de l'image et consiste en l'attribution, au pixel en cours de traitement, d'une valeur intermédiaire entre la valeur initiale des signaux représentatifs de sa composition et les valeurs des signaux représentatifs de la composition des pixels voisins au sein du bloc de filtrage dans lequel est compris le pixel en cours de traitement, grâce à une pluralité de coefficients réglables pondérateurs des valeurs des signaux représentatifs de la composition des pixels au sein du bloc de filtrage.

Selon une autre particularité, les trois tests de calcul des variations de la composition chromatique et/ou de luminance entre les pixels du bloc de filtrage, lors de l'étape de détection de contours au sein du bloc de filtrage dans lequel est compris le pixel en cours de traitement, consiste en :

- un test de moyenne ;
- un test de filtre passe-haut ;
- un test de gradient.
- Selon une autre particularité, le test de moyenne consiste en :
- un calcul de la valeur moyenne des signaux représentatifs des compositions chromatiques et/ou de luminance sur un ensemble de 9 pixels, constitué du pixel en cours de traitement et des 8 pixels adjacents ;
- un calcul de la valeur absolue de la différence entre la valeur moyenne de l'ensemble de 9 pixels avec la valeur des signaux représentatifs de la composition chromatique et/ou de luminance du pixel en cours de traitement ;
- une comparaison de cette valeur absolue avec un seuil réglable, dit seuil de test de moyenne.
- Selon une autre particularité, le test de filtre passe-haut consiste en :
- un calcul de la somme des valeurs des signaux représentatifs des compositions chromatique et/ou de luminance d'un ensemble de 4 pixels situés au-dessus, au-dessous, à droite et à gauche du pixel en cours de traitement ;
- un calcul de la valeur absolue de la différence entre 4 fois la valeur du signal représentatif du pixel en cours de traitement et cette somme des valeurs de l'ensemble des 4 pixels ;
- une comparaison de cette valeur absolue avec un seuil réglable, dit seuil de filtre passe-haut.
- Selon une autre particularité, le test de gradient consiste en :
- un calcul de la somme des valeurs des signaux représentatifs des compositions chromatique et/ou de luminance d'un ensemble de 3 pixels, adjacents au pixel en cours de traitement et situés à gauche de ce pixel ;
- un calcul de la somme des valeurs des signaux représentatifs des compositions chromatique et/ou de luminance d'un ensemble de 3 pixels, adjacents au pixel en cours de traitement et situés à droite de ce pixel ;
- un calcul d'un gradient horizontal consistant en la valeur absolue de la différence entre ces deux sommes des valeurs des signaux des pixels adjacents, respectivement à gauche et à droite du pixel en cours de traitement ;
- un calcul de la somme des valeurs des signaux représentatifs des compositions chromatique et/ou de luminance d'un ensemble de 3 pixels, adjacents au pixel en cours de traitement et situés au-dessous de ce pixel ;
- un calcul de la somme des valeurs des signaux représentatifs des compositions chromatique et/ou de luminance d'un ensemble de 3 pixels, adjacents au pixel en cours de traitement et situés au-dessus de ce pixel ;
- un calcul d'un gradient vertical consistant en la valeur absolue de la différence entre ces deux sommes des valeurs des signaux des pixels adjacents, respectivement au-dessous et au-dessus du pixel en cours de traitement ;
- un calcul de la somme du gradient horizontal et du gradient vertical, puis comparaison de cette somme des gradients avec un seuil réglable, dit seuil de gradient.

Selon une autre particularité, les trois seuils des tests de détection de contours ont des valeurs entières et sont réglables pour permettre l'ajustement de la détection des contours dans l'image, l'étape de détection révélant la présence d'un contour dans le bloc de filtrage lorsque les valeurs calculées dans ces tests de moyenne, de filtre passe-haut et de gradient sont supérieures ou égales aux seuils, respectivement, de moyenne, de filtre passe-haut et de gradient.

Selon une autre particularité, les coefficients pondérateurs des valeurs des signaux représentatifs de la composition des pixels au sein d'un bloc de filtrage ont des valeurs entières et sont réglables soit sur 2 bits, soit sur 3 bits, soit sur 8 bits, de façon à faciliter l'implémentation du procédé dans un circuit intégré.

Selon une autre particularité, le procédé est mis en oeuvre grâce à une application logicielle exécutée sur des moyens de traitement du système de traitement d'image, cette application logicielle permettant, d'une part, le contrôle des différentes étapes du procédé à réaliser par le système de traitement d'image, grâce à une première étape de choix de réalisation du rehaussement de contour et une seconde étape de choix du type de filtrage à réaliser et, d'autre part, le réglage des seuils mémorisés et utilisés dans les tests de détection de contour, ainsi que le réglage et la mémorisation des coefficients pondérateurs utilisés dans le rehaussement de contours et dans le filtrage des contours, en fonction des opérations à réaliser par le système, au sein des blocs de filtrage.

Selon une autre particularité, les blocs successifs de traitement des pixels de l'image consistent en 32 lignes de 32 pixels, chaque composante chromatique et/ou de luminance des signaux représentatifs de chaque pixel étant traitée en fonction de la composante chromatique et/ou de luminance des signaux représentatifs des pixels voisins au sein de blocs de filtrage, centrés autour du pixel en cours de traitement, consistant en 3 lignes de 5 pixels et successivement décalés d'un pixel à la fois, ligne par ligne, au sein des blocs de traitement.

Selon une autre particularité, les blocs successifs de traitement des pixels de l'image consistent en 32 lignes de 32 pixels, chaque composante chromatique et/ou de luminance des signaux représentatifs de chaque pixel étant traité en fonction de la composante chromatique et/ou de luminance des signaux représentatifs des pixels voisins au sein de blocs de filtrage centrés autour du pixel en cours de traitement, consistant en 5 lignes de 5 pixels et successivement décalés d'un pixel à la fois, ligne par ligne, au sein des blocs de traitement.

Selon une autre particularité, les blocs successifs de traitement des pixels de l'image sont décalés entre eux de 24 pixels horizontalement sur l'image, de façon à permettre leur chevauchement et le traitement des pixels situés sur les bords latéraux de ces blocs de traitement.

Selon une autre particularité, les blocs successifs de traitement des pixels de l'image sont décalés entre eux verticalement de 28 pixels lorsque les blocs de filtrage consisterit en 5 lignes de 5 pixels et de 30 pixels lorsque les blocs de filtrage consistent en 3 lignes de 5 pixels, de façon à permettre le traitement des pixels situés sur les bords supérieurs et inférieurs de ces blocs de traitement.

Un second but de l'invention est de proposer un système de traitement d'image permettant la mise en oeuvre des étapes du procédé selon l'invention.

Ce but est atteint par un système de traitement d'image, par filtrage des signaux représentatifs de la composition chromatique et/ou de luminance des pixels d'une image, comportant des moyens d'acquisition de données représentatives d'images, des moyens de calcul, des moyens de mémorisation permettant le stockage de l'intégralité des données représentatives de l'image à traiter et des moyens d'accès aux moyens de mémorisation, caractérisé en ce qu'il comprend, d'une part, des moyens de traitement permettant le traitement d'une partie des données représentatives de l'image à traiter, par des blocs de traitement successifs des signaux représentatifs des pixels de l'image, les dimensions de ces blocs de traitement des pixels permettant de réduire le nombre d'accès nécessaires aux moyens de mémorisation du système pour le traitement de l'intégralité de l'image et, d'autre part, des moyens de déterminer si il faut réaliser, pour le pixel en cours de traitement, un rehaussement de contours ou, dans la négation, si il faut passer directement à l'opération de filtrage.

Selon une autre particularité, les moyens d'accès aux moyens de mémorisation du système de traitement d'image ont une bande passante limitée mais ils permettent l'accès aux données selon des coordonnées de blocs de pixels dans l'image au lieu d'un accès selon les lignes successives de l'image.

Selon une autre particularité, les moyens de traitement du système de traitement d'image exécutent une application logicielle permettant l'interopérabilité des différents moyens du système, le contrôle des étapes réalisées, ainsi que le réglage des valeurs des seuils et des coefficients pondérateurs, en fonction des opérations à réaliser par le système.

BREVE DESCRIPTION DES DESSINS

D'autres particularités et avantages de la présente invention apparaîtront plus clairement à la lecture de la description ci-après, faite en référence aux dessins annexés, dans lesquels :

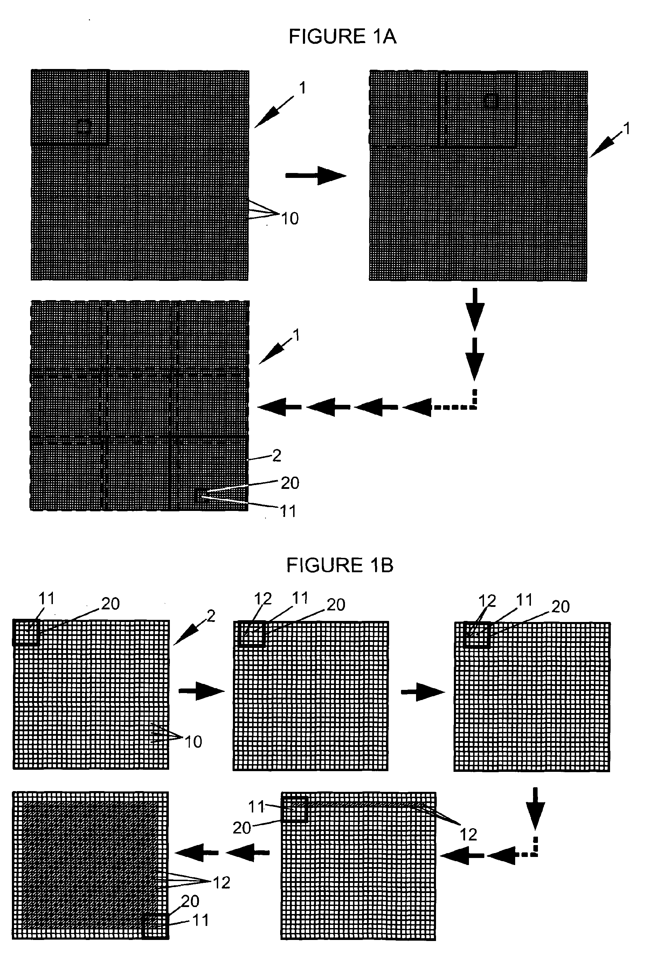

- la figure 1A représente un schéma des pixels d'une image avec les blocs de traitement tels qu'ils sont successivement appliqués sur l'image pour la couvrir dans son intégralité et la figure 1 B représente un détail d'un bloc de traitement avec les blocs de filtrage tels qu'ils sont successivement appliqués dans chaque bloc de traitement pour en couvrir la quasi-totalité,

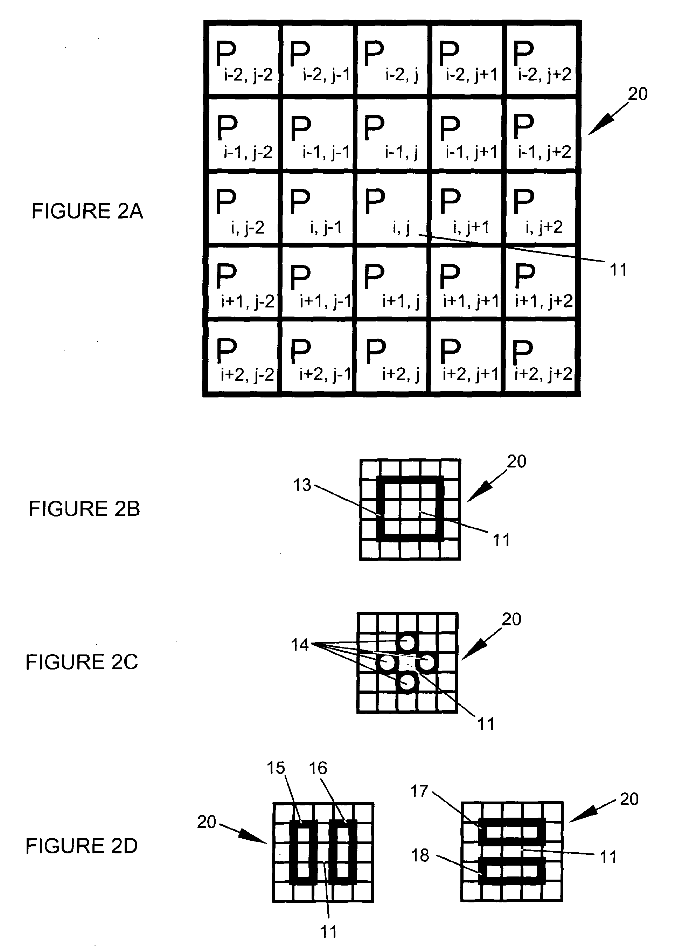

- la figure 2A représente un schéma d'un bloc de filtrage de 5 lignes de 5 pixels, avec la composition chromatique et/ou de luminance de chaque pixel en fonction des coordonnées (i, j) du pixel au sein du bloc de filtrage et les figures 2B à 2 D représentent un schéma des pixels utilisés au cours des tests respectivement de moyenne, de filtre passe-haut et de gradient,

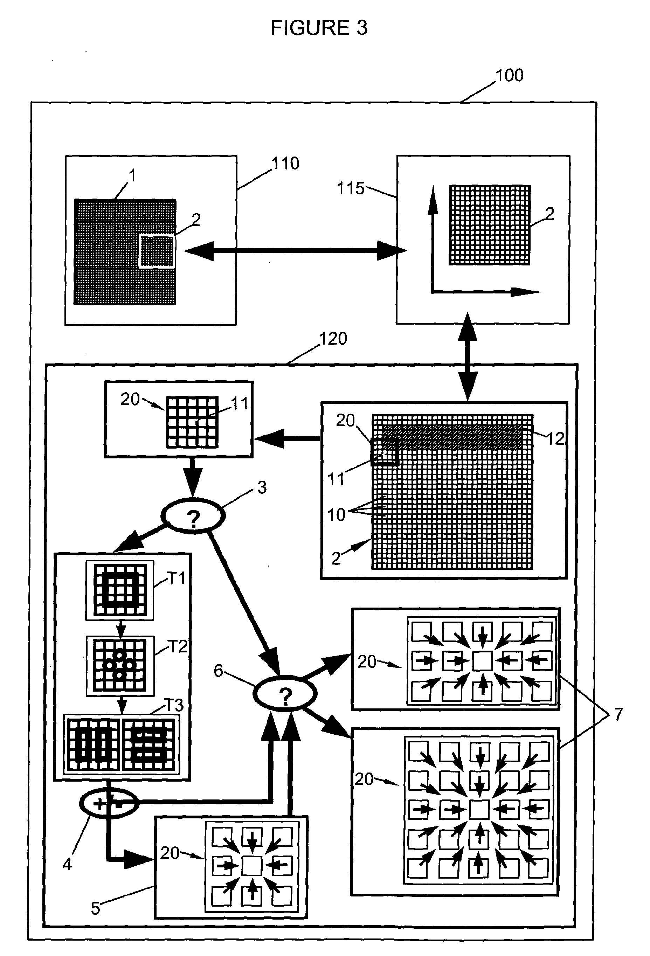

- la figure 3 représente un schéma des étapes du procédé selon l'invention, tel qu'il est mis en oeuvre par le système de traitement d'image.

DESCRIPTION DES MODES DE REALISATION PREFERES DE L'INVENTION

La présente invention de procédé de traitement d'image, par filtrage séparé de chacune des composantes chromatiques et/ou de luminance des signaux représentatifs des pixels (10) d'une image (1), consiste en un traitement des pixels (10) de l'image (1) par des blocs (2) de traitement successivement appliqués sur l'image (1), comme représenté sur la figure 1A. Au sein de ces blocs (2) de traitement successifs, les signaux représentatifs de la composition chromatique et/ou de la luminance des pixels sont traités dans des blocs (20) de filtrage, par exemple de 5 pixels sur 5 pixels, successivement appliqués sur les pixels (10) du bloc (2) de traitement, comme représenté sur la figure 1 B. Les blocs (20) de filtrage sont centrés autour du pixel (11) en cours de traitement et sont déplacés d'un pixel à la fois, ligne par ligne, jusqu'à ce que la quasi-totalité des pixels (10) du bloc (2) de traitement aient été traités. Les pixels (12) déjà filtrés, suite au passage des blocs (20) de filtrage précédents, sont représentés en hachuré. On notera, qu'à cause de la structure des blocs (20) de filtrage, tous les pixels (10) du bloc (2) de traitement ne peuvent pas être traités par les blocs (20) de filtrage. Pour pallier à ce problème, les blocs (2) de traitement se chevauchent sur l'image (1), comme représenté sur la figure 1A, de façon à permettre le traitement de tous les pixels (10) de l'image, même ceux situés en bordure des blocs (2) de traitement. Par exemple, pour des blocs (20) de filtrage de 5 pixels sur 5 pixels et des blocs (2) de traitement de 32 pixels sur 32 pixels, les blocs (2) de traitement successifs devront être décalés de seulement 28 pixels (horizontalement et verticalement) pour offrir un chevauchement suffisant pour permettre le traitement de tous les pixels de l'image (1). Le système (100) de traitement qui permet la mise en oeuvre du procédé possède des moyens (110) de mémorisation dans lesquels sont stockés les signaux représentatifs de la composition chromatique et/ou de luminance des pixels (10) de l'image (1). Des moyens (120) de traitement du système de traitement accèdent, grâce à des moyens (115) d'accès aux moyens de mémorisation, à une partie des données stockées dans ces moyens (110) de mémorisation. La nouveauté de la présente invention consiste en ce que les moyens (120) de traitement du système accèdent à des blocs (2) de traitement des pixels au lieu d'accéder à des lignes de pixels. En effet, les systèmes de traitement traitent en général les images par lignes successives, en accédant, par exemple, à une ou deux ligne(s) de 1024 pixels à la fois. Or, les procédés de filtrage nécessitent la prise en compte des signaux représentatifs de pixels situés sur plusieurs lignes voisines de celle où se situe le pixel en cours de traitement. Ces procédés multiplient donc le nombre d'accès aux moyens de mémorisation du système. Les moyens (115) d'accès aux moyens (110) de mémorisation ont généralement une bande passante limitée, qui ralentit d'autant plus le traitement que le nombre d'accès nécessaire est important. Dans la présente invention, les moyens de traitement accèdent à des blocs (2) de pixels de l'image. Ces blocs (2) peuvent consister, par exemple, en 32 lignes de 32 pixels, soit 1024 pixels également. Ainsi, le procédé selon l'invention ne nécessite plus qu'un seul accès aux moyens de mémorisation pour le traitement de 1024 pixels de l'image (1). Les moyens (120) de traitement calculent les coordonnées dans l'image (1) des pixels qui correspondent au bloc (2) de traitement à traiter. Ces coordonnées permettent aux moyens (115) d'accès aux moyens (110) de mémorisation d'accéder spécifiquement aux pixels nécessaires au traitement du bloc (2) en cours, comme représenté sur la figure 3. Les signaux représentatifs de la composition chromatique et/ou de luminance en cours de traitement pour ces pixels d'un bloc (2) de traitement sont ainsi transférés vers les moyens (120) de traitement qui peuvent alors traiter les pixels du bloc (2) de traitement.

A l'intérieur des blocs (2) de traitement, les signaux représentatifs de la composition chromatique et/ou de luminance de chaque pixel sont traités successivement au sein de blocs (20) de filtrage. Ces blocs (20) de filtrage sont centrés autour du pixel (11) en cours de traitement et sont déplacés d'un pixel à la fois, ligne par ligne, jusqu'à ce que tous les pixels du bloc (2) de traitement aient été traités. Selon le type de filtrage (7) souhaité, ces blocs (20) de filtrage peuvent consister en 5 lignes de 5 pixels ou en 3 lignes de 5 pixels, comme représenté sur la figure 3. Le type de filtrage utilisant des blocs (20) de 5 lignes de 5 pixels est dit filtrage 5 par 5 et celui utilisant des blocs (20) de 3 lignes de 5 pixels est dit filtrage 5 par 3. Une étape (6) de choix permettra à l'utilisateur du système (100) de traitement d'image, de choisir de réaliser le filtrage 5 par 3 ou le filtrage 5 par 5. Une application logicielle exécutée sur les moyens (120) de traitement du système (100) permet l'affichage de choix sur des moyens d'affichage du système et la saisie par l'utilisateur, grâce à des moyens de saisie du système, des opérations souhaitées. L'application logicielle peut également être configurée pour choisir automatiquement les opérations les plus adaptées. Cette application logicielle permet de contrôler l'interopérabilité des différents moyens mis en oeuvre dans le système (100) de traitement et la mise en oeuvre des étapes du procédé selon l'invention. Ainsi, en fonction du type de traitement à réaliser sur l'image, l'application logicielle gèrera l'exécution des différentes étapes et l'itération de l'accès aux blocs (2) de traitement successifs, jusqu'à ce que tous les pixels de l'image aient subi le traitement désiré.

Le filtrage (7) consiste à attribuer à la valeur des signaux représentatifs de la composition du pixel (11) en cours de traitement une valeur intermédiaire entre sa valeur initiale et celle de l'ensemble de ces 14 ou de ces 24 voisins dans le bloc (20) de filtrage. Cette attribution de nouvelle valeur aux signaux du pixel (11) est réalisée par les moyens (120) de traitement du système (100) de traitement, grâce à des moyens de calcul. Pour un bloc (20) de filtrage 5 par 5, tel que celui représenté sur la figure 2A, les signaux représentatifs de la composition chromatique et/ou de luminance des pixels sont traités par les moyens de calcul qui réalisent le filtrage. Dans la figure 2A, l'indice P correspond à une composante chromatique et/ou de luminance des pixels et les indices i et j correspondent aux coordonnées des pixels au sein du bloc (20) de filtrage. Un filtrage 5 par 5 consiste à attribuer aux signaux ($P_{i,j}$) du pixel (11) en cours de traitement une valeur intermédiaire entre sa valeur initiale ($P_{i,j}$) et celles des 24 autres pixels du bloc (20) de filtrage 5 par 5. Un filtrage 5 par 3 consiste à attribuer aux signaux ($P'_{i,j}$) du pixel (11) en cours de traitement une valeur intermédiaire entre sa valeur initiale ($P_{i,j}$) et celles des 24 autres pixels du bloc (20) de filtrage 5 par 3. Cette valeur intermédiaire est calculée, par les moyens de calcul des moyens (120) de traitement, grâce à des coefficients pondérateurs de filtrage des signaux représentatifs de la composition des pixels. Ces coefficients de filtrage ont des valeurs entières et sont codées sur 2, 3 ou 8 bits, de façon à faciliter l'implémentation de cette étape de filtrage dans des circuits intégrés, par exemple, de type ASIC (pour l'anglais « Application-Specific Integrated Circuit »).

Le filtrage 5 par 5 est réalisé selon la formule suivante :

$$(P'_{i,j}) = (\,(P_{i,j})*A+$$

$$(P_{i,j-1} + P_{i,j+1})*B+(P_{i-1,j} + P_{i+1,j})*C+$$

$$(P_{i-1,j-1} + P_{i-1,j+1} + P_{i+1,j-1} + P_{i+1,j+1})*D+$$

$$(P_{i,j-2} + P_{i,j+2})*E + (P_{i-2,j} + P_{i+2,j})*F +$$

$$(P_{i-1,j-2} + P_{i-1,j+2} + P_{i+1,j-2} + P_{i+1,j+2})*G +$$

$$(P_{i-2,j-1} + P_{i-2,j+1} + P_{i+2,j-1} + P_{i+2,j+1})*G +$$

$$(P_{i-2,j-2} + P_{i-2,j+2} + P_{i+2,j-2} + P_{i+2,j+2})*H +$$

$$/\,(A + 2*(B + C + E + F) + 4*(D + H) + 8*G))$$

Le filtrage 5 par 3 est réalisé selon la formule suivante :

**6**

$$(P'_{i,j}) = ( (P_{i,j})*A +$$

$$(P_{i,j-1} + P_{i,j+1})*B + (P_{i-1,j} + P_{i+1,j})*C +$$

$$(P_{i-1,j-1} + P_{i-1,j+1} + P_{i+1,j-1} + P_{i+1,j+1})*D +$$

$$(P_{i,j-2} + P_{i,j+2})*E +$$

$$(P_{i-1,j-2} + P_{i-1,j+2} + P_{i+1,j-2} + P_{i+1,j+2})*G +$$

$$/ (A + 2*(B + C + E) + 4*(D + G))$$

Dans ces deux formules, A, B, C, D, E, F, G et H sont des coefficients pondérateurs de filtrage des signaux représentatifs de la composition chromatique et/ou de luminance des pixels.
A, B, C et D sont des entiers réglables entre -128 et 127 (codés sur 8 bits)
E et F sont des entiers réglables entre -4 et 3 (codés sur 3 bits)
G et H sont des entiers réglables entre -2 et 1 (codés sur 2 bits).

Préalablement à cette étape de filtrage, le procédé selon l'invention permet de réaliser également une amélioration de la qualité de l'image par une étape (5) de rehaussement des contours détectés au sein des blocs (20) de filtrage. Ces étapes de détection et de rehaussement des contours peuvent être choisies par l'utilisateur grâce à l'affichage d'un choix par l'application logicielle et la saisie d'une commande par l'utilisateur ou directement par l'application logicielle, par exemple, lorsque l'utilisateur requiert l'exécution d'un agrandissement de l'image par des moyens d'agrandissement d'image du système (100) de traitement d'image. Lors de cette étape (3) de choix, si la détection et le rehaussement des contours ne sont pas choisis, le système (100) s'orientera directement vers l'étape (6) de choix du type de filtrage (7) à réaliser parmi le filtrage 5 par 5 et le filtrage 5 par 3. Si la détection et le rehaussement des contours sont choisis, le système (100) s'orientera vers les étapes de tests de détection de contours. Ces étapes de test réalisent, grâce aux moyens de calcul des moyens (120) de traitement, un calcul des variations entre les pixels voisins dans le bloc (20) de filtrage, de la composante chromatique et/ou de luminance en cours de traitement. Ces trois tests consistent en un test (T1) de moyenne, un test (T2) de filtre passe-haut et un test (T3) de gradient, représentés respectivement sur les figures 2B, 2C et 2D. Le test (T1) de moyenne consiste d'abord en un calcul de la valeur moyenne des signaux représentatifs des compositions chromatiques et/ou de luminance sur un ensemble (13) de 9 pixels, constitué du pixel (11) en cours de traitement et des 8 pixels adjacents. Ensuite, la valeur absolue de la différence entre cette valeur moyenne de l'ensemble (13) de 9 pixels avec la valeur des signaux du pixel (11) en cours de traitement est comparée avec un seuil réglable, dit seuil de test de moyenne. Si cette valeur calculée est supérieure ou égale au seuil de test de moyenne, alors le test (T1) de la moyenne est positif et il révèle la présence d'une variation locale des signaux de composition chromatique et/ou de luminance. Ce calcul du test (T1) de la moyenne consiste à vérifier la condition définie par la formule suivante :

$$Abs ( (P_{i-1,j-1} + P_{i-1,j} + P_{i-1,j+1} + P_{i,j-1} + P_{i,j+1} + P_{i+1,j} + P_{i+1,j-1} + P_{i+1,j+1}$$

$$+ P_{i,j}) / 9 - P_{i,j}) \geq S1,$$

où Abs( ) signifie la valeur absolue de l'expression entre parenthèses.

Le test (T2) de filtre passe-haut consiste d'abord en un calcul de la somme des valeurs des signaux représentatifs des compositions chromatique et/ou de luminance d'un ensemble (14) de 4 pixels situés au-dessus, au-dessous, à droite et à gauche du pixel (11) en cours de traitement. Ensuite la valeur absolue de la différence entre 4 fois la valeur des signaux représentatifs du pixel en cours de traitement et cette somme des valeurs de l'ensemble (14) de 4 pixels est comparée avec un seuil réglable, dit seuil de filtre passe-haut. Si cette valeur calculée est supérieure ou égale au seuil de test de filtre passe-haut, alors le test (T2) de filtre passe-haut est positif et il révèle la présence d'une variation locale, à une haute fréquence spatiale, des signaux de composition chromatique et/ou de luminance. Ce calcul du test (T2) de filtre passe-haut consiste en filtre de Laplace et en la vérification de la condition définie par la formule suivante :

$$Abs ( 4* P_{i,j} - (P_{i-1,j} + P_{i,j-1} + P_{i,j+1} + P_{i+1,j}) ) \geq S2,$$

où Abs( ) signifie la valeur absolue de l'expression entre parenthèses.

Le test (T3) de gradient consiste d'abord en un calcul de la somme des valeurs des signaux d'un ensemble (15) de 3 pixels, adjacents au pixel (11) en cours de traitement et situés à gauche de ce pixel et en un calcul de la somme des valeurs des signaux d'un ensemble (16) de 3 pixels, adjacents au pixel (11) en cours de traitement et situés à droite de ce pixel. La valeur absolue de la différence entre ces deux sommes donne la valeur d'un gradient horizontal des variations de la composition chromatique et/ou de luminance. Ensuite, un calcul de la somme des valeurs des signaux d'un ensemble (17) de 3 pixels, adjacents au pixel en cours de traitement et situés au-dessous de ce pixel, puis des signaux d'un ensemble (18) de 3 pixels, adjacents au pixel en cours de traitement et situés au-dessus de ce pixel permet le calcul d'un gradient vertical consistant en la valeur absolue de la différence entre ces deux sommes. Enfin, la somme du gradient horizontal et du gradient vertical est comparée avec un seuil réglable, dit seuil de gradient. Si cette valeur calculée est supérieure ou égale au seuil de test de gradient, alors le test (T3) de gradient est positif et il révèle que la variation locale à haute fréquence détectée par le test (T2) de filtre passe-haut n'est pas due à un bruit des signaux de composition chromatique et/ou de luminance mais bien à la présence d'un contour. Ce calcul du test (T3) de gradient consiste en la vérification de la condition définie par la formule suivante :

$$\text{Abs} ((P_{i-1,j+1} + P_{i,j+1} + P_{i+1,j+1}) - (P_{i-1,j-1} + P_{i,j-1} + P_{j+1,j-1}))$$

$$+ \text{Abs} ((P_{i+1,j-1} + P_{i+1,j} + P_{i+1,j+1}) - (P_{i-1,j-1} + P_{i-1,j} + P_{i-1,j+1})) \geq S3,$$

où Abs( ) signifie la valeur absolue de l'expression entre parenthèses.

Les trois seuils (S1, S2, S3) des tests de détection de contours ont des valeurs entières et sont réglables pour permettre l'ajustement de la détection des contours dans l'image. Suite à cette étape de calcul des tests détection de contours dans le bloc (20) de filtrage, une étape (4) d'évaluation permet d'orienter le procédé vers une étape (5) de rehaussement du contour détecté ou directement vers l'étape (6) de choix du type de filtrage (7) à réaliser. Si un seul des tests (T1, T2, T3) est négatif, alors il n'existe pas de vrai contour dans le bloc (20) en cours de traitement et le choix (6) du type de filtrage (7) peut être réalisé directement. Par contre, si les trois tests (T1, T2, T3) sont positifs, l'étape (4) d'évaluation permet de déterminer qu'il existe bien un contour dans le bloc (20) de filtrage en cours de traitement. Le contour ainsi détecté pourra alors être accentué grâce à une étape (5) de rehaussement de contour permettant la modification de la valeur des signaux représentatifs du pixel (11) en cours de traitement dans le bloc (20) de filtrage.

L'étape (5) de rehaussement de contours consiste en l'attribution, aux signaux $(P_{i,j})$ du pixel (11) en cours de traitement, d'une valeur $(P'_{i,j})$ intermédiaire entre sa valeur $(P_{i,j})$ initiale et celles des 8 pixels immédiatement adjacents au sein du bloc (20) de filtrage, grâce à une pluralité de coefficients réglables pondérateurs de rehaussement. Le calcul de cette valeur intermédiaire est réalisé grâce aux moyens de calcul des moyens (120) de traitement du système (100) et consiste en la formule suivante :

$$(P'_{i,j}) = ((P_{i-1,j-1} + P_{i-1,j+1} + P_{i+1,j-1} + P_{i+1,j+1})^*K +$$

$$(P_{i-1,j} + P_{i+1,j})^*L +$$

$$(P_{i,j-1} + P_{i,j+1})^*M +$$

$$(P_{i,j})^*N +$$

$$/ (N + 4^*K + 2^*(L + M))$$

Dans cette formule, K, L, M et N sont des coefficients pondérateurs de rehaussement des signaux représentatifs de la composition chromatique et/ou de luminance des pixels.

K, L et M sont des entiers réglables valant soit -4, soit -2, soit -1 soit 0 (codés sur 2 bits)

N est un entier réglable entre -128 et 127 (codé sur 8 bits).

Suite à cette éventuelle étape (5) de rehaussement de contour, l'étape (6) de choix du type de filtrage (7) à réaliser parmi le filtrage 5 par 5 ou le filtrage 5 par 3 permet d'orienter le procédé vers la dernière étape de traitement du bloc (20) de filtrage. Une fois ce filtrage (7) réalisé selon la méthode décrite ci-dessus, le bloc (20) de filtrage est décalé d'un pixel au sein du bloc (2) de traitement, afin de traiter le pixel suivant selon les mêmes étapes. Une fois tous les pixels traités au sein d'un bloc (2) de traitement, les moyens (120) de traitement transmettent, vers les moyens (110) de mémorisation, les nouveaux signaux représentatifs de la nouvelle composition chromatique et/ou de luminance des pixels traités dans le bloc (2) de traitement, pour le stockage de ces nouvelles valeurs de la composante chromatique et/ou de luminance qui vient d'être traitée. Ensuite, les moyens (120) de traitement réalisent éventuellement les mêmes étapes pour les autres composantes chromatiques et/ou de luminance à traiter pour ces pixels du bloc (2) de traitement. Une fois toutes les composantes chromatiques et/ou de luminance pour chacun des pixels du bloc (2) de traitement, les moyens (120) de traitement accèdent au bloc (2) de traitement suivant pour réaliser les mêmes étapes de traitement sur chacune des composantes. Les nouveaux signaux représentatifs des pixels traités des blocs (2) successifs sont enregistrés successivement dans les moyens (110) de mémorisation du système (100) de traitement à chaque accès à un nouveau bloc (2) de traitement. Une fois toutes les composantes traitées dans tous les blocs (2) de traitement appliqué sur l'image (1), le système de traitement d'image enregistre la nouvelle image complète dans ses moyens (110) de mémorisation.

On comprend que l'on a ainsi réalisé un procédé de traitement d'image par filtrage de blocs de pixels permettant une amélioration de la qualité de l'image grâce à un éventuel rehaussement des contours et un filtrage des signaux représentatifs des composantes chromatiques et/ou de luminance des pixels de l'image, avec un nombre limité d'accès aux moyens de mémorisation du système de traitement d'image.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1. Procédé de traitement d'image, par filtrage séparé de chacune des composantes chromatiques et/ou de luminance des signaux représentatifs des pixels d'une image (1), mis en oeuvre par un système (100) de traitement d'image et **caractérisé en ce qu'**il consiste en au moins une étape (7) de filtrage des signaux représentatifs des pixels de l'image (1), précédée d'une étape (3) de décision de la nécessité de réaliser, préalablement à l'étape (7) de filtrage, des étapes de détection (4) de contours et de rehaussement (5) des contours détectés, ces étapes de filtrage (7), de détection (4) et de rehaussement (5) de contours étant réalisées grâce à des blocs (2) successifs de traitement dont les dimensions carrées sont adaptées de façon à limiter le nombre d'accès à des moyens (110) de mémorisation dans lesquels sont stockés les signaux représentatifs de la composition chromatique et/ou de luminance des pixels de l'image (1), dans le système (100) de traitement d'image, chaque pixel étant traité en fonction des signaux représentatifs des pixels voisins au sein de blocs (20) de filtrage, centrés autour du pixel (11) en cours de traitement, successivement décalés d'un pixel à la fois, ligne par ligne, au sein des blocs (2) de traitement.

2. Procédé selon la revendication 1, **caractérisé en ce que** l'étape (7) de filtrage peut être précédée des étapes suivantes, permettant une amélioration de la qualité de l'image par rehaussement de contours :

   - détection (4) de contours au sein du bloc (20) de filtrage dans lequel est compris le pixel (11) en cours de traitement, grâce à trois tests (T1, T2, T3) différents de calcul des variations de la composition chromatique et/ou de luminance entre des pixels du bloc (20) de filtrage ;
   - rehaussement (5) de contours, lorsque les trois tests (T1, T2, T3) révèlent la présence d'un contour, par attribution, au pixel (11) en cours de traitement, d'une valeur intermédiaire entre la valeur initiale des signaux représentatifs de sa composition et les valeurs des signaux représentatifs de la composition des pixels voisins au sein du bloc (20) de filtrage, grâce à une pluralité de coefficients réglables pondérateurs des valeurs des signaux représentatifs de la composition des pixels au sein du bloc (20)de filtrage.

3. Procédé selon une des revendications 1 et 2, **caractérisé en ce que** l'étape (7) de filtrage, lors du traitement de chacune des composantes des signaux représentatifs des pixels de l'image (1), au sein des blocs (20) de filtrage, permet une amélioration de la qualité de l'image (1) et consiste en l'attribution, au pixel (11) en cours de traitement, d'une valeur intermédiaire entre la valeur initiale des signaux représentatifs de sa composition et les valeurs des signaux représentatifs de la composition des pixels voisins au sein du bloc (20) de filtrage dans lequel est compris le pixel (11) en cours de traitement, grâce à une pluralité de coefficients réglables pondérateurs des valeurs des signaux représentatifs de la composition des pixels au sein du bloc (20) de filtrage.

4. Procédé selon une des revendications 1 à 3, **caractérisé en ce que** les trois tests (T1, T2, T3) de calcul des variations de la composition chromatique et/ou de luminance entre les pixels du bloc (20) de filtrage, lors de l'étape (4) de détection de contours au sein du bloc (20) de filtrage dans lequel est compris le pixel (11) en cours de traitement, consiste en :

- un test (T1) de moyenne ;
- un test (T2) de filtre passe-haut ;
- un test (T3) de gradient.

**5.** Procédé selon une des revendications 1 à 4, **caractérisé en ce que** le test (T1) de moyenne consiste en :

- un calcul de la valeur moyenne des signaux représentatifs des compositions chromatiques et/ou de luminance sur un ensemble (13) de 9 pixels, constitué du pixel (11) en cours de traitement et des 8 pixels adjacents ;
- un calcul de la valeur absolue de la différence entre la valeur moyenne de l'ensemble (13) de 9 pixels avec la valeur des signaux représentatifs de la composition chromatique et/ou de luminance du pixel (11) en cours de traitement ;
- une comparaison de cette valeur absolue avec un seuil réglable, dit seuil de test de moyenne.

**6.** Procédé selon une des revendications 1 à 5, **caractérisé en ce que** le test (T2) de filtre passe-haut consiste en :

- un calcul de la somme des valeurs des signaux représentatifs des compositions chromatique et/ou de luminance d'un ensemble (14) de 4 pixels situés au-dessus, au-dessous, à droite et à gauche du pixel (11) en cours de traitement ;
- un calcul de la valeur absolue de la différence entre 4 fois la valeur du signal représentatif du pixel (11) en cours de traitement et cette somme des valeurs de l'ensemble (14) des 4 pixels ;
- une comparaison de cette valeur absolue avec un seuil réglable, dit seuil de filtre passe-haut.

**7.** Procédé selon une des revendications 1 à 6, **caractérisé en ce que** le test (T3) de gradient consiste en :

- un calcul de la somme des valeurs des signaux représentatifs des compositions chromatique et/ou de luminance d'un ensemble (15) de 3 pixels, adjacents au pixel (11) en cours de traitement et situés à gauche de ce pixel (11) ;
- un calcul de la somme des valeurs des signaux représentatifs des compositions chromatique et/ou de luminance d'un ensemble (16) de 3 pixels, adjacents au pixel (11) en cours de traitement et situés à droite de ce pixel (11) ;
- un calcul d'un gradient horizontal consistant en la valeur absolue de la différence entre ces deux sommes des valeurs des signaux des pixels adjacents, respectivement à gauche (15) et à droite (16) du pixel (11) en cours de traitement ;
- un calcul de la somme des valeurs des signaux représentatifs des compositions chromatique et/ou de luminance d'un ensemble (18) de 3 pixels, adjacents au pixel (11) en cours de traitement et situés au-dessous de ce pixel (11) ;
- un calcul de la somme des valeurs des signaux représentatifs des compositions chromatique et/ou de luminance d'un ensemble (17) de 3 pixels, adjacents au pixel (11) en cours de traitement et situés au-dessus de ce pixel (11) ;
- un calcul d'un gradient vertical consistant en la valeur absolue de la différence entre ces deux sommes des valeurs des signaux des pixels adjacents, respectivement au-dessous (18) et au-dessus (17) du pixel (11) en cours de traitement ;
- un calcul de la somme du gradient horizontal et du gradient vertical, puis comparaison de cette somme des gradients avec un seuil réglable, dit seuil de gradient.

**8.** Procédé selon une des revendications 1 à 7, **caractérisé en ce que** les trois seuils des tests (T1, T2, T3) de détection (4) de contours ont des valeurs entières et sont réglables pour permettre l'ajustement de la détection des contours dans l'image (1), l'étape de détection (4) révélant la présence d'un contour dans le bloc (20) de filtrage lorsque les valeurs calculées dans ces tests de moyenne (T1), de filtre passe-haut (T2) et de gradient (T3) sont supérieures ou égales aux seuils, respectivement, de moyenne, de filtre passe-haut et de gradient.

**9.** Procédé selon une des revendications 1 à 8, **caractérisé en ce que** les coefficients pondérateurs des valeurs des signaux représentatifs de la composition des pixels au sein d'un bloc (20) de filtrage ont des valeurs entières et sont réglables soit sur 2 bits, soit sur 3 bits, soit sur 8 bits, de façon à faciliter l'implémentation du procédé dans un circuit intégré.

**10.** Procédé selon une des revendications 1 à 9, **caractérisé en ce que** le procédé est mis en oeuvre grâce à une application logicielle exécutée sur des moyens (120) de traitement du système (100) de traitement d'image, cette application logicielle permettant, d'une part, le contrôle des différentes étapes du procédé à réaliser par le système (100) de traitement d'image, grâce à une première étape (3) de choix de réalisation du rehaussement de contour et une seconde étape (6) de choix du type de filtrage à réaliser et, d'autre part, le réglage des seuils mémorisés et utilisés dans les tests de détection (4) de contour, ainsi que le réglage et la mémorisation des coefficients pondérateurs utilisés dans le rehaussement (5) de contours et dans le filtrage (7) des contours, en fonction des opérations à réaliser par le système, au sein des blocs (20) de filtrage.

**11.** Procédé selon une des revendications 1 à 10, **caractérisé en ce que** les blocs (2) successifs de traitement des pixels de l'image consistent en 32 lignes de 32 pixels, chaque composante chromatique et/ou de luminance des signaux représentatifs de chaque pixel étant traitée en fonction de la composante chromatique et/ou de luminance des signaux représentatifs des pixels voisins au sein de blocs (20) de filtrage, centrés autour du pixel (11) en cours de traitement, consistant en 3 lignes de 5 pixels et successivement décalés d'un pixel à la fois, ligne par ligne, au sein des blocs (2) de traitement.

**12.** Procédé selon une des revendications 1 à 11, **caractérisé en ce que** les blocs (2) successifs de traitement des pixels de l'image (1) consistent en 32 lignes de 32 pixels, chaque composante chromatique et/ou de luminance des signaux représentatifs de chaque pixel étant traité en fonction de la composante chromatique et/ou de luminance des signaux représentatifs des pixels voisins au sein de blocs (20) de filtrage centrés autour du pixel (11) en cours de traitement, consistant en 5 lignes de 5 pixels et successivement décalés d'un pixel à la fois, ligne par ligne, au sein des blocs (2) de traitement.

**13.** Procédé selon une des revendications 1 à 12, **caractérisé en ce que** les blocs (2) successifs de traitement des pixels de l'image (1) sont décalés entre eux de 24 pixels horizontalement sur l'image (1), de façon à permettre leur chevauchement et le traitement des pixels situés sur les bords latéraux de ces blocs (2) de traitement.

**14.** Procédé selon une des revendications 1 à 13, **caractérisé en ce que** les blocs (2) successifs de traitement des pixels de l'image (1) sont décalés entre eux verticalement de 28 pixels lorsque les blocs (20) de filtrage consistent en 5 lignes de 5 pixels et de 30 pixels lorsque les blocs (20) de filtrage consistent en 3 lignes de 5 pixels, de façon à permettre le traitement des pixels situés sur les bords supérieurs et inférieurs de ces blocs (2) de traitement.

**15.** Système (100) de traitement d'image, par filtrage des signaux représentatifs de la composition chromatique et/ou de luminance des pixels d'une image (1), comportant des moyens d'acquisition de données représentatives d'images, des moyens de calcul, des moyens (110) de mémorisation permettant le stockage de l'intégralité des données représentatives de l'image (1) à traiter et des moyens (115) d'accès aux moyens (110) de mémorisation, **caractérisé en ce qu'**il comprend, d'une part, des moyens (120) de traitement permettant le traitement d'une partie des données représentatives de l'image (1) à traiter, par des blocs (2) de traitement successifs des signaux représentatifs des pixels de l'image (1), les dimensions de ces blocs (2) de traitement des pixels permettant de réduire le nombre d'accès nécessaires aux moyens (110) de mémorisation du système (100) pour le traitement de l'intégralité de l'image (1) et, d'autre part, des moyens de déterminer s'il faut réaliser, pour le pixel (11) en cours de traitement, un rehaussement (5) de contours ou, dans la négation, s'il faut passer directement à l'opération de filtrage (7).

**16.** Système selon la revendication 15, **caractérisé en ce que** les moyens (115) d'accès aux moyens (110) de mémorisation du système (100) de traitement d'image ont une bande passante limitée mais ils permettent l'accès aux données selon des coordonnées de blocs (2) de pixels dans l'image (1) au lieu d'un accès selon les lignes successives de l'image.

**17.** Système selon une des revendications 15 et 16, **caractérisé en ce que** les moyens (120) de traitement du système (100) de traitement d'image exécutent une application logicielle permettant l'interopérabilité des différents moyens du système, le contrôle des étapes réalisées, ainsi que le réglage des valeurs des seuils et des coefficients pondérateurs, en fonction des opérations à réaliser par le système.

## FIGURE 1A

## FIGURE 1B

FIGURE 2A

| P<br>i-2, j-2 | P<br>i-2, j-1 | P<br>i-2, j | P<br>i-2, j+1 | P<br>i-2, j+2 |
|---|---|---|---|---|
| P<br>i-1, j-2 | P<br>i-1, j-1 | P<br>i-1, j | P<br>i-1, j+1 | P<br>i-1, j+2 |
| P<br>i, j-2 | P<br>i, j-1 | P<br>i, j | P<br>i, j+1 | P<br>i, j+2 |
| P<br>i+1, j-2 | P<br>i+1, j-1 | P<br>i+1, j | P<br>i+1, j+1 | P<br>i+1, j+2 |
| P<br>i+2, j-2 | P<br>i+2, j-1 | P<br>i+2, j | P<br>i+2, j+1 | P<br>i+2, j+2 |

FIGURE 2B

FIGURE 2C

FIGURE 2D

# FIGURE 3

**Office européen**

**des brevets**

**RAPPORT DE RECHERCHE EUROPEENNE**

Numéro de la demande

EP 05 29 0946

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2002/006231 A1 (JAYANT NUGGEHALLY S ET AL) 17 janvier 2002 (2002-01-17) * alinéas [0002], [0009] - [0012], [0050] - [0060] * * revendications 1,5,6,9,10,12 * * figures 13,14 * | 1,15,16 | G06T5/00 |
| Y | | 2,3, 5-14,17 | |
| Y | IVERSON L A ET AL: "LOGICAL/LINEAR OPERATORS FOR IMAGE CURVES" IEEE TRANSACTIONS ON PATTERN ANALYSIS AND MACHINE INTELLIGENCE, IEEE INC. NEW YORK, US, vol. 17, no. 10, 1 octobre 1995 (1995-10-01), pages 982-996, XP000532203 ISSN: 0162-8828 abstract page 982, right column, line 25 - end of column sections II and III page 984, section II.A | 2,3, 5-14,17 | |
| A | | 1,15,16 | DOMAINES TECHNIQUES RECHERCHES (Int.Cl.7) G06T |
| A | FOLEY, J.D., VAN DAM A., FEINER S.K., HUGHES J.F.: "computer graphics, principles and practice, second edition in C" juillet 1997 (1997-07), ADDISON-WESLEY , XP002311305 page 887-893, sections 18.8.1 and 18.8.2 | 1-17 | |

-/--

Le présent rapport a été établi pour toutes les revendications

| Lieu de la recherche | Date d'achèvement de la recherche | Examinateur |
|---|---|---|
| La Haye | 25 août 2005 | Deltorn, J-M |

EPO FORM 1503 03.82 (P04C02)

**Office européen** **RAPPORT DE RECHERCHE EUROPEENNE**
**des brevets**

Numéro de la demande

EP 05 29 0946

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | JÄHNE B.: "digital image processing, 5th edition"<br>2002, SPRINGER , HEIDELBERG, GERMANY , XP002311306<br>pages 99-124, chapter 4<br>pages 315-337, chapter 12<br>----- | 1-17 | |
| A | EP 0 652 672 A (XEROX CORP)<br>10 mai 1995 (1995-05-10)<br>* colonne 6, ligne 23 - colonne 8, ligne 25 *<br>* colonne 9, ligne 27 - ligne 45 *<br>* revendications 1,6,8 *<br>----- | 1,15,16 | |
| A | US 6 621 595 B1 (FAN JIAN ET AL)<br>16 septembre 2003 (2003-09-16)<br>* revendications 1,10 *<br>* colonne 4, ligne 34 - colonne 5, ligne 10 *<br>* colonne 8, ligne 20 - ligne 67 *<br>----- | 1,15,16 | |
| A | US 6 055 340 A (NAGAO KIMITOSHI)<br>25 avril 2000 (2000-04-25)<br>* figures 1,2,5,9,10 *<br>* revendication 1 *<br>----- | 1,15,16 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| La Haye | 25 août 2005 | Deltorn, J-M |

EPO FORM 1503 03.82 (P04C02)

**EP 1 591 957 A1**

| Document brevet cité au rapport de recherche | | Date de publication | Membre(s) de la famille de brevet(s) | | Date de publication |
|---|---|---|---|---|---|
| US 2002006231 | A1 | 17-01-2002 | AU | 7332601 A | 21-01-2002 |
| | | | AU | 7687101 A | 21-01-2002 |
| | | | AU | 7687601 A | 21-01-2002 |
| | | | WO | 0205121 A2 | 17-01-2002 |
| | | | WO | 0205562 A2 | 17-01-2002 |
| | | | WO | 0205214 A2 | 17-01-2002 |
| | | | US | 2002021756 A1 | 21-02-2002 |
| | | | US | 2002028024 A1 | 07-03-2002 |
| EP 0652672 | A | 10-05-1995 | US | 5363209 A | 08-11-1994 |
| | | | DE | 69424920 D1 | 20-07-2000 |
| | | | DE | 69424920 T2 | 02-11-2000 |
| | | | EP | 0652672 A2 | 10-05-1995 |
| | | | JP | 7193719 A | 28-07-1995 |
| US 6621595 | B1 | 16-09-2003 | AU | 2711502 A | 15-05-2002 |
| | | | EP | 1330917 A2 | 30-07-2003 |
| | | | JP | 2004521529 T | 15-07-2004 |
| | | | WO | 0237832 A2 | 10-05-2002 |
| US 6055340 | A | 25-04-2000 | JP | 10243238 A | 11-09-1998 |
| | | | JP | 10243239 A | 11-09-1998 |

EPO FORM P0460